# EUROPEAN PATENT SPECIFICATION

(11) **EP 1 780 444 B1**
(45) Date of publication and mention of the grant of the patent: **18.04.2012**
(21) Application number: 05767262.8
(22) Date of filing: 29.07.2005
(51) Int. Cl.: F16H 55/06, F16H 55/22, B62D 5/04

(54) **SPEED REDUCTION GEAR**
UNTERSETZUNGSGETRIEBE
ENGRENAGE DE REDUCTION DE VITESSE

(30) Priority: 29.07.2004 JP 2004221506
(43) Date of publication of application: 02.05.2007
(73) Proprietor: NSK LTD., Shinagawa-ku, Tokyo 141-8560 (JP)
(72) Inventor: IWANO, Toshiyuki, 1- chome Maebashi-shi Gunma 371-8528 (JP)
(74) Representative: Grünecker, Kinkeldey, Stockmair & Schwanhäusser
(86) International application number: PCT/JP2005/013939
(87) International publication number: WO 2006/011596

(56) References cited:
- EP-A2- 1 083 112
- JP-A- 10 141 477
- JP-A- 2000 084 747
- JP-A- 2001 304 379
- JP-A- 2003 139 220
- JP-A- 2003 335 250
- JP-A- 2003 343 696
- JP-A- 2004 155 245
- JP-A- 2005 214 338

## Description

### Technical Field

The present invention relates to a reduction gear used for electric power steering, and more particularly to, improvement of tooth surfaces of a worm wheel.

### Related Art

Conventionally, a reduction gear can advantageously transmit a rotational force of an electric motor having a high rotation speed and a low torque to a steering shaft with a high reduction ratio, the reduction gear has been used for a reduction unit of an electric power steering apparatus.

However, if a worm and a worm wheel of the reduction gear are made of a metal, there is a problem in that unpleasant noise such as teeth friction sound and vibration sound is generated during handling of a steering wheel.

In order to solve the problem, techniques for increasing strength of gear teeth are disclosed in, for example, Patent Documents 1 and 2.

A reduction gear (teeth gear) disclosed in Patent Document 1 is constructed with a worm made of a metal and worm wheel made of a denaturized synthetic resin containing reinforcing fibers. In the reduction gear, the synthetic resin is denaturized to increase a strength thereof, so that a containing amount of the reinforcing fiber as a reinforcing material can be suppressed.

In a reduction gear (teeth gear) disclosed in Patent Document 2, aluminum stearate of 0.1 wt% to 0.3 wt% is added in a synthetic resin for a worm wheel, so that it is possible to improve smoothness of the worm wheel.

In general, in such a conventional reduction gear, nylon 6, nylon 66, or nylon 45 are used as a base material for the synthetic resin part of the worm wheel, and reinforcing fibers such as glass fibers are added to the base material, so that it is possible to reinforce mechanical properties of the synthetic resin and to suppress variation in water-absorption property of nylon.

A further reduction gear as it is state of the art is disclosed in Patent Document 3. The reduction gear according to Patent Document 3 defines the preamble of claim 1.
Patent Document 1: JP-A 10-141477
Patent Document 2: JP-A 2002-327829
Patent Document 3: JP-A 2004-155245

### Disclosure of the Invention

### Problems to be solved by the Invention

However, the synthetic resins used for the reduction gears disclosed in Patent Documents 1 and 2 have a higher longitudinal elastic coefficient than a non-reinforced grade one, so that the synthetic is difficult to elastically deform. Therefore, in a state where a teeth contact area of the gear teeth of the worm wheel engaged with the worm is small, initial acquaintanceship (a state of increase in teeth contact degree until a transmission torque from the worm and a friction are balanced) is set. As a result, by using the reduction gears disclosed in Patent Documents 1 and 2, it is difficult to increase a durability-allowable transmission tongue exceeding that of the reinforced grade one.

In addition, in the reduction gears disclosed in Patent Documents 1 and 2, the reinforcing fibers are included in a surface layer of an engagement surface of the gear teeth engaged with the worm. Since a rigid contact (a contact between the reinforcing fibers included in the surface layer of the engagement surface and the metal worm) without a lubricant interposed occurs between the worm and the worm wheel, driving resistance in a large load region increases. Accordingly, since large friction is generated between the engaged worm wheel and worm, fatigue strength and friction resistance decrease, so that lifetime of the worm is shortened.

The present invention provide a reduction gear capable of increasing a durability-allowable transmission tongue by improving initial acquaintanceship of an engagement surface of a teeth gear of a worm wheel and capable of lengthening lifetime of the worm by reducing a friction of the worm.

### Means for solving the Problems

According to an aspect of the invention, there is provided a reduction gear including: a worm made of a metal; and a worm wheel having gear teeth engaged with the worm, wherein at least the gear teeth of the worm wheel are made of a synthetic resin containing reinforcing fibers, and wherein an engagement surface of the gear teeth being made of a resin containing reinforcing fibers is so processed that a containing ratio of the reinforcing fibers of a surface layer is lower than that of the reinforcing fiber of an inner portion.

In the above aspect, a depth of the surface layer may be larger than a diameter of the reinforcing fibers and smaller than a length of the reinforcing fibers.

In addition, a processing worm on which diamond grinder powder or CBN grinder powder electroplated may be engaged with the gear teeth and rotated, so that the reinforcing fibers are removed from the surface layer.

In addition, a processing worm of which teeth surfaces are roughened with a strong acid and cured may be engaged with the engagement surface of the gear teeth and rotated, so that the reinforcing fibers are removed from the surface layer.

In addition, a processing worm of which teeth surfaces are roughened with a nitrogenizing process may be engaged with the engagement surface of the gear teeth and rotated, so that the reinforcing fibers are removed from the surface layer.

In addition, the worm and the worm wheel may constitute a reduction unit of an electric power steering apparatus.

### Effect of the Invention

In the reduction gear according to the invention, at least the gear teeth of the worm wheel are made of a synthetic resin containing reinforcing fibers, and an engagement surface of the gear teeth is so processed that a containing ratio of the reinforcing fibers of a surface layer is lower than that of the reinforcing fiber of an inner portion. Accordingly, a longitudinal elastic coefficient of the surface layer of the engagement surface is reduced, so that it is possible to teeth contact area according to the initial acquaintanceship. As a result, a durability of the gear teeth is improved, so that it is possible to increase a durability-allowable transmission tongue.

In addition, since a containing ratio of the reinforcing fibers of the surface layer of the engagement surface of the gear teeth can be reduced, so that it is possible to reduce a friction of the worm causing a rigid contact to the reinforcing fibers. Accordingly, a fatigue strength of the worm can be improved, so that it is possible to lengthen the lifetime of the worm. In addition, a hardness management range of a thermal process performed to obtain a desired hardness of the worm is widened at a lowered level thereof, so that it is possible to reduce production cost and labor.

In addition, a processing worm on which diamond grinder powder or CBN grinder powder is electroplated, a processing worm of which teeth surfaces are roughened with a strong acid and cured, or a processing worm of which teeth surfaces are roughened with a long time nitrogenizing process is engaged with the engagement surface of the gear teeth and rotated, so that a depth of the surface layer can be larger than a diameter of the reinforcing fibers and smaller than a length of the reinforcing fibers. Accordingly, the reinforcing fibers buried in several directions on the surface of the surface layer can be removed. As a result, the reinforcing fibers are not removed beyond a necessary degree thereof, and the elasticity of the engagement surface in the transverse direction can be easily reduced.

In addition, the reduction gear is used for a reduction unit of an electric power steering apparatus, so that it is possible to length lifetime of the reduction unit and to provide a large steering supporting force to a steering shaft. As a result, the electric power steering apparatus can be employed by medium-sized and large-sized cars as well as small-sized cars.

### BRIEF DESCRIPTION OF THE DRAWINGS

[FIG. 1]

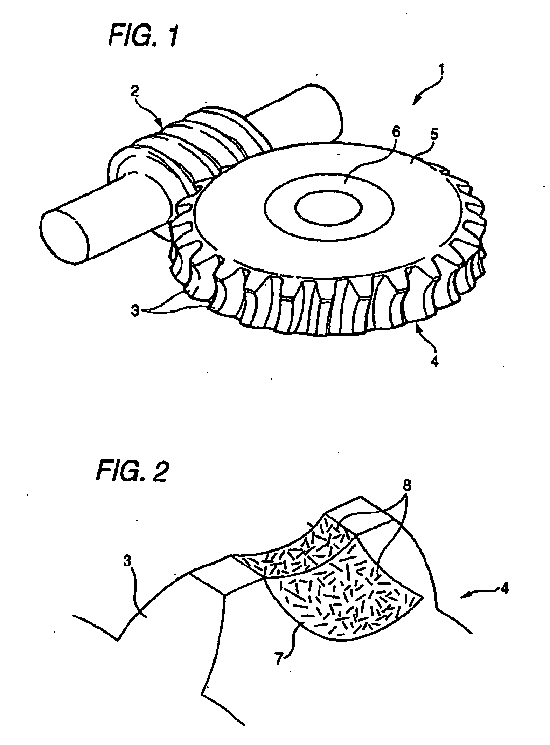

   FIG. 1 is a perspective view of a reduction gear according to an embodiment of the invention.
[FIG. 2]
   FIG. 2 is a perspective view of a gear tooth of a worm wheel showing a state where an engagement surface of the gear tooth is subject to cutting and grinding.
[FIG. 3]

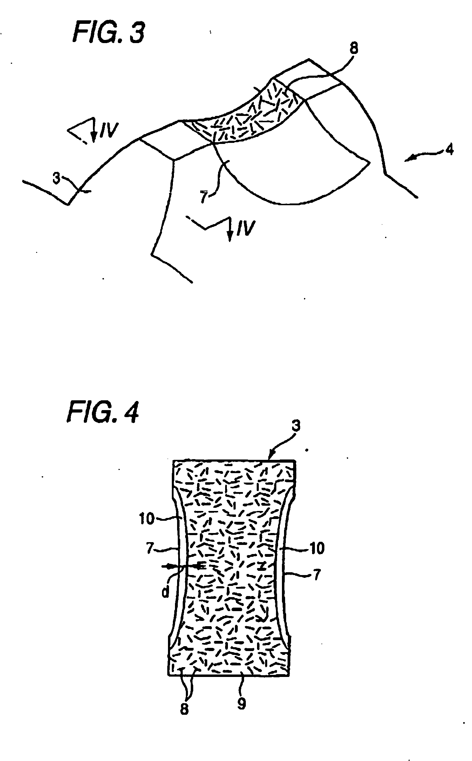

   FIG. 3 is a perspective view of a gear tooth of a worm wheel showing a state where reinforcing fibers are removed from the engagement surface.
[FIG. 4]
   FIG. 4 is a cross sectional view of the gear tooth taken along line IV-IV of FIG. 3.
[FIG. 5]

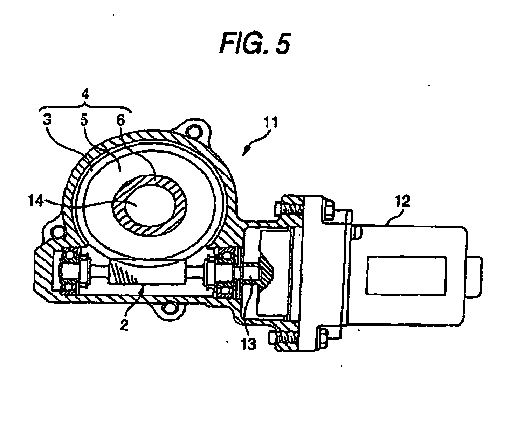

   FIG. 5 is a cross sectional view of a reduction unit of an electric power steering apparatus according to another embodiment employing the reduction gear.

### DESCRIPTION OF REFERENCE

- 1: reduction gear
- 2: worm
- 3: gear teeth
- 4: worm wheel
- 7: engagement surface
- 8: reinforcing fibers
- 9: inner portion
- 10: surface layer
- 11: reduction unit
- d: depth of surface layer

### DETAILED DESCRIPTION OF THE PREFERRED EMBODIMENTS

Now, embodiments of the present invention will be described with reference to the accompanying drawings.

FIG. 1 is a perspective view of a reduction gear according to an embodiment of the invention. In the figure, the reduction gear 1 includes a worm 2 made of a metal and a worm wheel 4 having gear teeth 3 engaged with the worm 2.

The worm wheel 4 is integrally constructed with a resin portion 5 having a circumferential surface on which the gear teeth are formed and a core portion 6 made of a metal. The resin portion 6 is made of a synthetic resin containing reinforcing fibers. As a preferred example of the synthetic resin, there are nylon (polyamide) resins made of such as nylon 6, nylon 66, and nylon 46, phenol resins, poly acetyl reins, and the like as a base material of the synthetic resin with a mechanical property thereof reinforced with the reinforcing fibers.

As a preferred example of the reinforcing fiber, there are glass fibers, carbon fibers, potassium titanate whisker, aluminum borate whisker, and the like. The reinforcing fibers may be used as a single one or a combination thereof. The types or mixing ratios of the base material and the reinforcing fiber of the synthetic resin may be suitably selected according to the purpose of the synthetic resin.

In the embodiment, a portion from the circumferential surface of the core portion 60 to distal ends of the gear tooth 3 is formed with the resin portion 5, but not limited thereto. For example, the entire portion of the worm wheel 4 may be made of the synthetic resin. Otherwise, only the circumferential portion of the worm wheel 2 on which the gear teeth are formed may be made of the synthetic resin.

FIG. 2 is a perspective view of a gear tooth of a worm wheel showing a state where an engagement surface of the gear tooth is subject to cutting and grinding; and FIG. 3 is a perspective view of a gear tooth of a worm wheel showing a state where reinforcing fibers are removed from the engagement surface by processing of the engagement surface. Referring to FIG. 2, an engagement surface 7 to be engaged with the worm 2 is formed on a tooth surface of the gear tooth 3. Just after the cutting and grinding of the engagement surface 7, the reinforcing fibers 8 remain on the surface. Although the reinforcing fibers 8 are required for reinforcing the mechanical properties of the synthetic resin, the reinforcing fibers 8 remaining on the engagement surface 7 causes deterioration in initial acquaintanceship or increase in driving resistance of the worm 2, as described above.

Therefore, in the embodiment, in order to remove the reinforcing fibers 8 from the engagement surface 7, the engagement surface 7 is so processed that a containing ratio of the reinforcing fibers 8 of the surface layer 10 is lower than that of an inner portion 9, as shown in FIG. 4. The surface layer 10 is so processed that a depth thereof d is larger than a diameter of the reinforcing fibers 8 and smaller than a length of the reinforcing fibers 8. Accordingly, the reinforcing fibers 8 buried in several directions on the surface of the surface layer 10 can be removed. Therefore, the reinforcing fibers 8 are not removed beyond a necessary degree thereof, and the elasticity of the engagement surface 7 in the transverse direction (the left and right directions in FIG. 4) can be easily reduced.

As a tool for processing the engagement surface 7, a processing worm constructed by electroplating, for example, natural diamond grinder powder thereon may be used. The processing worm is constructed by stirring the diamond grinder powder in a nickel plating bath in the electroplating process to form a coating film of the accumulated diamond grinder powder on the processing worm having the same shape of the worm 2. On such a processing worm, the natural diamond grinder power having a granularity of about 600 is electroplated. By engaging the processing worm on which the natural diamond grinder powder is electroplated with the engagement surface 7 of the gear tooth 3 and rotating the processing worm, the engagement surface 7 is cut. At this time, since the reinforcing fibers 8 contained in the synthetic resin layer constituting the gear teeth 3 are not elastically deformed, the reinforcing fibers contacting the natural diamond grinder power electroplated on the processing worm are dug up and peeled off the synthetic resin layer. On the other hand, since the base material, that is, the synthetic resin is elastically deformed, the synthetic resin are not peeled off but remained on the engagement surface 7. As a result, as shown in FIG. 4, the surface layer 10 having a lower containing ratio of the reinforcing fibers 8 than the inner portion 9 is formed on the engagement surface 7.

Although the natural diamond is used as a grinder powder electroplated on the processing worm in the embodiment, the invention is not limited thereto. Alternatively, a synthetic diamond, a metal-coated synthetic diamond, or the like may be used for the diamond grinder power. In addition, CBN grinder powder such as cubic boron nitride and metal-coated cubic boron nitride may be used as the electroplated grinder powder.

In addition, a processing worm of which teeth surfaces are roughened with a strong acid and cured or a processing worm of which teeth surface are roughened with a long time nitrogenizing process may be used as a tool for processing the engagement surface 7, so that it is possible to obtain the same operations and effects as the processing worm on which the aforementioned diamond grinder powder is electroplated.

Like this, in the embodiment, the engagement surface 7 of the gear teeth 3 is so processed that the surface layer 10 having a lower containing ratio of the reinforcing fibers 8 than that of an inner portion 9 is formed on the engagement surface 7. Accordingly, a longitudinal elastic coefficient is reduced, so that it is possible to improve initial acquaintanceship (increase in teeth contact degree until a transmission torque from the worm 2 and a friction are balanced). As a result, a durability of the gear teeth 3 is greatly improved, so that it is possible to increase a durability-allowable transmission tongue.

In addition, since the reinforcing fibers 8 contained in the surface layer 10 of the engagement surface 7 are removed, it is possible to reduce a friction of the worm 2 causing a rigid contact to the reinforcing fibers 8. Accordingly, the fatigue strength of the worm 2 can be improved, so that it is possible to lengthen the lifetime of the worm 2. In addition, the hardness of the worm 2 is lowered, so that it is possible to obtain a worm having the same durable usage times as the conventional one.

### Examples

Now, examples employing the aforementioned reduction gear will be described, but the invention is not limited thereto. In addition, components like those of the aforementioned reduction are denoted by like reference numerals, and description thereof is omitted.

FIG. 5 is a cross sectional view of a reduction unit of an electric power steering apparatus employing the aforementioned reduction gear. In the figure, the reduction unit 11 reduces rotation of a steering supporting electric motor 12 through a worm 2 connected to a rotating axis 13 of the electric motor 12 and a worm wheel 4 engaged with the worm 2 and transmits the reduced rotation to a steering shaft 14 fixedly inserted into a core portion 6 of the worm wheel 4.

In the example, the reduction unit 11 employs the aforementioned reduction gear, so that it is possible to increase a durability-allowable transmission torque by which the steering supporting force of the electric motor 12 can be transmitted to the steering shaft 14. Accordingly, in terms of the steering supporting force, an electric power steering apparatus which is mainly employed by small-sized cars can be employed by medium-sized and large-sized cars requiring a large steering supporting force.

In addition, since the steering supporting force can increase, the manual steering force can be reduced, so that it is possible to obtain smooth steering feeling.

Although the reduction gear is used for the electric power steering apparatus in the example, the invention is not limited thereto. The reduction gear may be used for reduction units of various reduction apparatuses, and the invention can be suitably applied to the reduction units.

According to the invention, initial acquaintanceship of an engagement surface of a teeth gear of a worm wheel can be improved, so that it is possible to increase a durability-allowable transmission tongue. In addition, according to the invention, a friction of a worm can be reduced, so that it is possible to provide a reduction gear with the worm having a lengthened lifetime.

## Claims

1. A reduction gear (1) comprising:
a worm (2) made of a metal; and
a worm wheel (4) having gear teeth (3) engaged with the worm (2), where
at least the gear teeth (3) of the worm wheel (4) are made of a synthetic resin containing reinforcing fibers, **characterized in that**
an engagement surface (7) of the gear teeth being made of a synthetic resin containing reinforcing fibers is so processed that a containing ratio of the reinforcing fibers (8) of a surface layer (10) is lower than that of the reinforcing fibers (8) of an inner portion (9).

2. A reduction gear (1) according to claim 1, wherein
a depth of the surface layer is larger than a diameter of the reinforcing fibers (8) and smaller than a length of the reinforcing fibers (8).

3. A reduction gear according to claim 1 or 2, **characterized in that**
the reinforcing fibers (8) are removed from the surface layer (10) by processing the engagement surface (7) of the gear teeth (3) by engagement with and rotation of a processing worm on which diamond grinder powder or CBN grinder powder is electroplated. .

4. A reduction gear (1) according to claim 1 or 2, **characterized in that**
the reinforcing fibers (8) are removed from the surface layer (10) by processing the engagement surface (7) of the gear teeth (3) by engagement with and rotation of a processing worm of which teeth surfaces are roughened with a strong acid and cured.

5. A reduction gear (1) according to claim 1 or 2, **characterized in that**
the reinforcing fibers (8) are removed from the surface layer (10) by processing the engagement surface (7) of the near teeth (3) by engagement with and rotation of a processing worm of which teeth surfaces are roughened with a nitrogenizing process.

6. A reduction gear (1) according to any one of claims 1 to 5, wherein
the worm (2) and the worm wheel (4) constitute a reduction unit of an electric power steering apparatus.

## Patentansprüche

1. Untersetzungsgetriebe (1) enthaltend:
eine Schnecke (2) hergestellt aus einem Metal; und
ein Schneckenrad (4) mit in Eingriff mit der Schnecke (2) stehenden Getriebezähnen (3), wobei
zumindest die Getriebezähne (3) des Schneckenrades (4) aus synthetischem verfestigende Fasern enthaltendem Harz hergestellt sind,
**dadurch gekennzeichnet, dass**
eine Eingriffsoberfläche (7) der Getriebezähnen (3), welche aus einem synthetischem verfestigende Fasern enthaltendem Harz hergestellt ist, so bearbeitet ist, dass ein enthaltener Anteil der verfestigenden Fasern (8) einer Oberflächenschicht (10) niedriger als der der verfestigenden Fasern (8) eines inneren Teils (9) ist.

2. Ein Untersetzungsgetriebe (1) nach Anspruch 1, wobei
eine Tiefe der Oberflächenschicht größer ist als ein Durchmesser der verfestigenden Fasern (8) und kleiner ist als eine Länge der verfestigenden Fasern (8).

3. Ein Untersetzungsgetriebe (1) nach Anspruch 1 oder 2, **dadurch gekennzeichnet, dass** die verfestigenden Fasern (8) von der Oberflächenschicht (10) durch Bearbeitung der Eingriffsoberfläche (7) der Getriebezähne (3) mittels Eingriffs mit und Rotation von einer Bearbeitungsschnecke entfernt sind, auf der Diamant-Schleifpulver oder CBN-Schleifpulver elektroplattiert ist.

4. Ein Untersetzungsgetriebe (1) nach Anspruch 1 oder 2, **dadurch gekennzeichnet, dass** die verfestigenden Fasern (8) von der Oberflächenschicht (10) durch Bearbeitung der Eingriffsoberfläche (7) der Getriebezähne (3) mittels Eingriffs mit und Rotation von einer Bearbeitungsschnecke entfernt sind, deren Zahnoberflächen mit einer starken Säure aufgerauht und gehärtet sind.

5. Ein Untersetzungsgetriebe (1) nach Anspruch 1 oder 2, **dadurch gekennzeichnet, dass** die verfestigenden Fasern (8) von der Oberflächenschicht (10) durch Bearbeitung der Eingriffsoberfläche (7) der Getriebezähne (3) mittels Eingriffs mit und Rotation von einer Bearbeitungsschnecke entfernt sind, deren Zahnoberflächen durch einen Nitriersprozess aufgerauht ist.

6. Ein Untersetzungsgetriebe (1) nach einem der Ansprüche 1 bis 5, wobei die Schnecke (2) und das Schneckenrad (4) eine Untersetzungseinheit einer elektrisch betriebenen Lenkungseinheit bildet.

## Revendications

1. Engrenage de réduction (1) comprenant :
une vis sans fin (2) fait d'un métal ; et
une roue à vis sans fin (4) ayant des dents d'engrenage (3) en prise avec la vis sans fin (2), où
au moins les dents d'engrenage (3) de la roue à vis sans fin (4) sont faites d'une résine synthétique contenant des fibres de renforcement, **caractérisé en ce que**
une surface de prise (7) des dents d'engrenage faites de la résine synthétique contenant des fibres de renforcement est traitée de telle manière qu'un rapport en contenu des fibres de renforcement (8) d'une couche de surface (10) est inférieur à celui des fibres de renforcement (8) d'une partie intérieure (9).

2. Engrenage de réduction (1) selon la revendication 1, dans lequel
une profondeur de la couche de surface est supérieure à un diamètre des fibres de renforcement (8) et inférieure à une longueur des fibres de renforcement (8).

3. Engrenage de réduction (1) selon la revendication 1 ou 2, **caractérisé en ce que**
les fibres de renforcement (8) sont enlevées de la couche de surface (10) en usinant la surface de prise (7) des dents d'engrenage (3) par prise avec et rotation d'une vis sans fin d'usinage sur laquelle une poudre abrasive de diamant ou une poudre abrasive CBN est électroplaquée.

4. Engrenage de réduction (1) selon la revendication 1 ou 2, **caractérisé en ce que**
les fibres de renforcement (8) sont enlevées de la couche de surface (10) en usinant la surface de prise (7) des dents d'engrenage (3) par prise avec et rotation d'une vis sans fin d'usinage dont les surfaces de dents sont rugosifiées avec un acide fort et durcies.

5. Engrenage de réduction (1) selon la revendication 1 ou 2, **caractérisé en ce que**
les fibres de renforcement (8) sont enlevées de la couche de surface (10) en usinant la surface de prise (7) des dents d'engrenage (3) par prise avec et rotation d'une vis sans fin d'usinage dont les surfaces de dents sont rugosifiées par un processus de nitrogénation.

6. Engrenage de réduction (1) selon l'une quelconque des revendications 1 à 5, dans lequel
la vis sans fin (2) et la roue à vis sans fin (4) constituent une unité de réduction d'un dispositif de direction assisté électrique.
